# EUROPÄISCHE PATENTANMELDUNG

(11) **EP 4 610 429 A1**
(43) Veröffentlichungstag der Anmeldung: **03.09.2025**
(21) Anmeldenummer: 24160579.9
(22) Anmeldetag: 29.02.2024
(51) Int. Cl.: E01C 19/48

(54) **STRASSENFERTIGER UMFASSEND EINEN GUTBUNKER ZUM AUFNEHMEN VON FERTIGUNGSMATERIAL**

(71) Anmelder: Joseph Vögele AG, 67067 Ludwigshafen/Rhein (DE)
(72) Erfinder: Schmidt, Thomas, 67067 Ludwigshafen/Rhein (DE)
(74) Vertreter: Grünecker Patent- und Rechtsanwälte PartG mbB

(57) **Zusammenfassung**

Straßenfertiger, umfassend einen Gutbunker zum Aufnehmen von Fertigungsmaterial, wobei der Gutbunker eine äußere Begrenzung umfasst, die den Innenraum des Gutbunkers zumindest teilweise von einer Umgebung trennt, und wobei der Gutbunker mit Fertigungsmaterial beschickt werden kann, beispielsweise mittels eines Beschicker-Fahrzeugs, wobei die Begrenzung eine mehrkomponentige Klappe zum Verschließen des Gutbunkers umfasst, wobei eine erste bewegliche Komponente der Klappe in einer offenen Position tiefer positioniert ist als eine zweite bewegliche Komponente der Klappe in einer offenen Position, und wobei eine Bewegung der ersten Komponente und der zweiten Komponente von der offenen Position in eine geschlossene Position, in der der Gutbunker verschlossen ist, zumindest teilweilse bewegungsgekoppelt erfolgt.

## Beschreibung

Die vorliegende Erfindung betrifft einen Straßenfertiger umfassend einen Gutbunker zum Aufnehmen von Fertigungsmaterial gemäß Anspruch 1 sowie eine Kombination aus einem Beschickerfahrzeug und einem Straßenfertiger nach Anspruch 13 und ein Verfahren zum Beschicken eines Gutbunkers eines Straßenfertigers gemäß Anspruch 14.

### Stand der Technik

Straßenfertiger sind aus dem Stand der Technik hinreichend bekannt. Diese umfassen einen Gutbunker, der beispielsweise unter Verwendung eines Beschickerfahrzeuges, wie einem Lkw mit Fertigungsmaterial zum Fertigen des Straßenbelags beschickt werden kann. Dazu wird der Gutbunker mit dem Fertigungsmaterial befüllt und das Fertigungsmaterial aus dem Gutbunker innerhalb des Straßenfertigers weitertransportiert, um so zur Einbaubohle zu gelangen und als Straßenbelag ausgegeben zu werden.

Es ist bekannt, dass das Fertigungsmaterial zum Einbau eine gewisse Mindesttemperatur aufweisen muss, da ansonsten ein Erstellen des Straßenbelags nur schwierig möglich ist. Um das Abkühlen des Fertigungsmaterials im Gutbunker zu vermeiden oder zumindest zu reduzieren, ist es ferner bekannt, die Begrenzungsflächen des Gutbunkers klappbar oder allgemein beweglich auszugestalten, sodass in einer offenen Position der Gutbunker mit Fertigungsmaterial beschickt werden kann und anschließend der Gutbunker bzw. dessen Seitenwände in eine geschlossene Position verbracht werden können, in der zumindest der Wärmetransport von Fertigungsmaterial an die Umgebungsluft teilweise reduziert ist.

Bisher bekannte klappbare Gutbunker haben jedoch den Nachteil, dass ein beschickender Lkw mit Seitenwänden des Gutbunkers kollidieren kann. Dies ist insbesondere dann der Fall, wenn der LKW eine Anhängerkupplung umfasst, die üblicherweise niedriger liegt als die Ladefläche des LKWs, auf der das Fertigungsmaterial geladen ist.

### Aufgabe

Ausgehend vom bekannten Stand der Technik besteht die zu lösende technische Aufgabe darin, einen Straßenfertiger anzugeben, der zuverlässig mit Fertigungsmaterial beschickt werden kann, wobei das Beschädigungsrisiko des Gutbunkers reduziert ist.

### Lösung

Diese Aufgabe wird erfindungsgemäß durch den Straßenfertiger gemäß Anspruch 1 und die Kombination aus einem Beschickerfahrzeug und einem Straßenfertiger gemäß Anspruch 13 sowie ein Verfahren zum Beschicken eines Gutbunkers eines Straßenfertigers gemäß Anspruch 14 erreicht. Vorteilhafte Weiterbildungen der Erfindung sind in den Unteransprüchen erfasst.

Der erfindungsgemäße Straßenfertiger umfasst einen Gutbunker zum Aufnehmen von Fertigungsmaterial, wobei der Gutbunker eine äußere Begrenzung umfasst, die den Innenraum des Gutbunkers zumindest teilweise von einer Umgebung trennt, und wobei der Gutbunker mit Fertigungsmaterial beschickt werden kann, beispielsweise mittels eines Beschicker-Fahrzeugs, wobei die Begrenzung eine mehrkomponentige Klappe zum Verschließen des Gutbunkers umfasst, wobei eine erste bewegliche Komponente der Klappe in einer offenen Position tiefer positioniert ist als eine zweite bewegliche Komponente der Klappe in einer offenen Position, und wobei eine Bewegung der ersten Komponente und der zweiten Komponente von der offenen Position in eine geschlossene Position, in der der Gutbunker verschlossen ist, zumindest teilweise bewegungsgekoppelt erfolgt.

Am Beispiel eines Gutbunkers in Form eines Würfels kann die mehrkomponentige Klappe beispielsweise ein Teil der Seitenfläche des Würfels sein. In der geöffneten Position ragt diese aus dem Volumen des Würfels hinaus und in der geschlossenen Position bildet die mehrkomponentige Klappe einen Teil der Seitenfläche. So ist verständlich, dass in der geschlossenen Position die Begrenzung des Innenraums durch die mehrkomponentige Klappe zu einem größeren Grad erfolgt als in der offenen Position. Allgemein kann der Innenraum als das Volumen verstanden werden, das von dem Gutbunker in der geschlossenen Position der mehrkomponentigen Klappe und ggf. anderer beweglicher Teile der äußeren Begrenzung begrenzt wird.

Dass die erste bewegliche Komponente in der offenen Position tiefer positioniert ist als die zweite bewegliche Komponente der Klappe in der offenen Position, ist im Sinne der Erfindung so zu verstehen, dass zumindest ein Teil der ersten Komponente, bevorzugt ein von dem Innenraum des Gutbunkers wegweisender Teil der ersten Komponente, eine tiefere obere Begrenzung umfasst als die zweite bewegliche Komponente. Dabei muss die erste bewegliche Komponente in der offenen Position nicht vollständig tiefer positioniert sein als die zweite bewegliche Komponente. Auch ein zumindest teilweise tieferes Positionieren ist umfasst.

Durch das Positionieren der ersten beweglichen Komponente in einer Position tiefer als die zweite bewegliche Komponente wird zum einen ein zuverlässiges Beschicken des Gutbunkers mit reduziertem Beschädigungsrisiko erreicht und zum anderen dennoch ein zuverlässiges Verschließen des Gutbunkers unter reduziertem Wärmeverlust des Fertigungsmaterials bewirkt.

Es kann vorgesehen sein, dass die erste Komponente eine erste obere Kante einer ersten äußeren Begrenzungsfläche und die zweite Komponente eine zweite obere Kante einer zweiten äußeren Begrenzungsfläche aufweist und wobei in der offnen Position die erste obere Kante tiefer positioniert ist als die zweite obere Kante. Die erste obere Kante oder die zweite obere Kante können gerade Linien sein, können jedoch auch gekrümmt sein. Im Falle einer gekrümmten oberen Kante ist bevorzugt vorgesehen, dass die zweite obere Kante in jedem Punkt höher oder höchstens gleich hoch wie die erste obere Kante positioniert ist. Hiermit wird ein Herausfallen von Fertigungsmaterial im Bereich der zweiten oberen Kante vermieden.

In einer Ausführungsform ist vorgesehen, dass die erste Komponente zur Bewegung von der offenen in die geschlossene Position um eine erste Drehachse drehbar gelagert ist und wobei die zweite Komponente zur Bewegung von der offenen in die geschlossene Position um eine zweite Drehachse drehbar gelagert ist. Durch ein Drehen der ersten und zweiten Komponente von der offenen in die geschlossene Position kann ein Herausfallen von Fertigungsmaterial vermieden werden, insbesondere wenn durch die Drehung eine Aufwärtsbewegung der ersten und zweiten Komponente bewirkt wird, sodass das Fertigungsmaterial in den Innenraum des Gutbunkers hineinrutscht.

Es kann vorgesehen sein, dass die erste Drehachse und die zweite Drehachse parallel zueinander verlaufen, oder dass die erste Drehachse und die zweite Drehachse einen Winkel miteinander einschließen, oder dass die erste Drehachse und die zweite Drehachse identisch sind. Durch parallele Ausgestaltung der ersten und zweiten Drehachse kann ein Mitführen der zweiten Komponente mit der ersten Komponente zuverlässiger erfolgen. Die Ausgestaltung von einen Winkel einschließenden ersten und zweiten Drehachsen kann bevorzugt sein, um ein Herausfallen von Fertigungsmaterial zu vermeiden.

Die erste Komponente kann einen Mitnehmer umfassen, der an der zweiten Komponente angreifen und die zweite Komponente mit der ersten Komponente mitführen kann. Hiermit kann mechanisch ein Mitführen der zweiten Komponente bei Bewegung der ersten Komponente erreicht werden, was weniger fehleranfällig ist.

Es kann vorgesehen sein, dass die zweite Komponente zwei auf gegenüberliegenden Seiten der ersten Komponente angeordnete Klappenelemente umfasst. Die tiefer positionierte erste Komponente wird so von höher positionierten Klappenelementen umgeben, sodass zum einen das Beschädigungsrisiko beim Beschicken minimiert wird und zum anderen ein versehentliches Herausfallen von Fertigungsmaterial in einem Bereich außerhalb der ersten Komponente vermieden wird.

Die Bewegung der ersten Komponente und/oder die Bewegung der zweiten Komponente kann durch ein Antriebselement erfolgen. Das Antriebselement kann ein hydraulisches Antriebselement, ein mechanisches Antriebselement oder ein elektrisches Antriebselement umfassen. Die Bewegungskopplung zwischen der ersten Komponente und der zweiten Komponente kann in dieser Ausführungsform insbesondere durch eine geeignete Steuerung, beispielsweise mithilfe einer Steuereinheit in Form eines Computers mit zugeordnetem Speichern realisiert werden. Hiermit ist das Bewegen der ersten und zweiten Komponente von der offenen in die geschlossene Position flexibler möglich, sodass beispielsweise auf unterschiedliche Arten von Beschickerfahrzeugen und entsprechenden Anforderungen flexibel reagiert werden kann.

Es kann vorgesehen sein, dass der größte Abstand eines Punktes der ersten Komponente in der offenen Position zum Boden weniger als 50cm, oder weniger als 45cm, oder weniger als 40cm, oder weniger als 30cm beträgt. Der Abstand vom Boden wird hier gemessen bei einer üblichen Positionierung des Straßenfertigers auf einer ebenen Oberfläche. Durch den geringen Abstand des obersten Punktes zum Boden wird sichergestellt, dass beispielsweise eine Komponente des Beschickerfahrzeuges, wie eine Anhängerkupplung, immer noch oberhalb der ersten Komponente in den Innenraum des Gutbunkers hineinragen kann. Damit wird vermieden, dass es zu Kollisionen zwischen dem Beschickerfahrzeug oder Teilen davon und dem Gutbunker kommt, sodass Beschädigungen vermieden werden können.

In einer Ausführungsform ist vorgesehen, dass die erste Komponente und die zweite Komponente so miteinander bewegungsgekoppelt sind, dass eine Bewegung der ersten Komponente über eine erste Wegstrecke von der offenen in die geschlossene Position ohne Mitbewegen der zweiten Komponente erfolgt und wobei eine Bewegung der ersten Komponente über eine zweite, nach der ersten Wegstrecke von der offenen in die geschlossene Position zurückgelegte Wegstrecke unter Mitbewegen der zweiten Komponente erfolgt.

Die erste Wegstrecke kann beispielsweise so gewählt werden, dass nach Zurücklegen dieser Wegstrecke die erste Komponente dieselbe Höhe aufweist wie die zweite Komponente. Werden anschließend beide zusammen miteinander in Richtung der geschlossenen Position bewegt, wird ein Herausfallen vom Fertigungsmaterial vermieden. In dieser, aber auch in allen anderen Ausführungsformen kann insbesondere vorgesehen sein, dass die erste Komponente und die zweite Komponente in jeder Position zwischen der offenen Position und der geschlossenen Position inklusive der offenen und der geschlossenen Position so relativ zueinander angeordnet sind, dass sich zwischen ihnen kein Spalt befindet, durch den Fertigungsmaterial hindurchtreten kann.

Es kann vorgesehen sein, dass die erste Komponente ein flexibles oder bewegliches Element umfasst, das sich in der offenen Position der ersten Komponente zumindest teilweise in vertikaler Richtung erstreckt und durch Krafteinwirkung in Richtung des Innenraums des Gutbunkers verkippt werden kann. Das flexible Element kann beispielsweise eine Gummileiste sein. Das bewegliche Element kann beispielsweise eine Klappe oder ein drehbares Blech aus Metall oder einem anderen Material, bevorzugt demselben Material, aus dem auch der Gutbunker besteht, sein. Durch das flexible oder bewegliche Element wird zum einen ein Herausfallen vom Fertigungsmaterial vermieden und zum anderen kann das Beschädigungsrisiko weiter reduziert werden.

Es kann vorgesehen sein, dass die erste Komponente und/oder die zweite Komponente eine Fläche umfassen, die in der offenen Position in Richtung des Innenraums angeschrägt ist. Die Fläche kann beispielsweise als Grundfläche der jeweiligen Komponente verstanden werden. Durch Anordnung dieser Fläche derart, dass sie in der offenen Position in Richtung des Innenraums angeschrägt ist (also in Richtung des Innenraums abfällt), wird sichergestellt, dass auf dieser Fläche abgeladenes Fertigungsmaterial in den Innenraum des Gutbunkers hineinfällt oder zumindest bei Bewegung der ersten oder zweiten Komponente in den Innenraum des Gutbunkers hineinfällt.

Erfindungsgemäß ist weiterhin eine Kombination aus einem Beschickerfahrzeug und einem Straßenfertiger nach einer der vorangegangenen Ausführungsformen vorgesehen, wobei das Beschickerfahrzeug dem Gutbunker Fertigungsmaterial zuführen kann und während des Zuführens von Fertigungsmaterial die Klappe in der offenen Position angeordnet sein kann und nach dem Zuführen von Fertigungsmaterial in die geschlossene Position verbracht werden kann. Mit dieser Kombination aus Beschickerfahrzeug und Straßenfertiger wird ein zuverlässiges Beschicken eines Gutbunkers mit Fertigungsmaterial mit reduziertem Risiko für Beschädigungen des Beschickerfahrzeuges und des Gutbunkers realisiert.

Weiterhin ist erfindungsgemäß ein Verfahren zum Beschicken eines Gutbunkers eines Straßenfertigers nach einer der vorangegangenen Ausführungsformen mit Fertigungsmaterial vorgesehen, wobei das Verfahren ein Positionieren der Klappe in der offenen Position, ein anschließendes Positionieren eines Beschickerfahrzeugs zum Zuführen von Fertigungsmaterial und Zuführen von Fertigungsmaterial an den Gutbunker, ein zumindest teilweises Wegbewegen des Beschickerfahrzeugs vom Gutbunker und ein anschließendes Bewegen der Klappe in die geschlossene Position umfasst. Dieses Verfahren erlaubt ein zuverlässiges Beschicken des Gutbunkers mit Fertigungsmaterial bei gleichzeitig reduziertem Beschädigungsrisiko des Beschickerfahrzeuges und des Straßenfertigers, insbesondere des Gutbunkers.

### Kurze Beschreibung der Figuren

- Figur 1: zeigt einen Straßenfertiger gemäß einer Ausführungsform.
- Figur 2: zeigt eine schematische Ansicht eines Gutbunkers.
- Figuren 3 bis 5: zeigen eine Ausführungsform eines Bewegungsablaufs. Beim Bewegen der mehrkomponentigen Klappe von der offenen in die geschlossene Position.

### Ausführliche Beschreibung

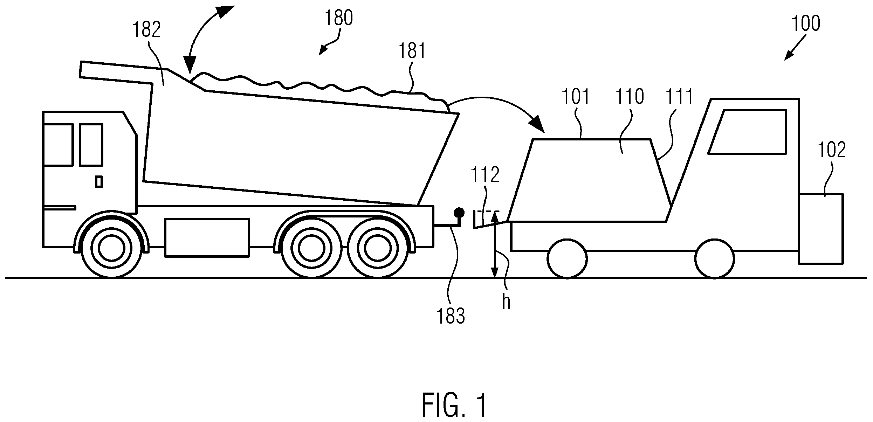

Figur 1 zeigt eine schematische Ansicht einer Kombination von einem Straßenfertiger 100 und einem Beschickerfahrzeug 180. In der hier gezeigten Ausführungsform ist das Beschickerfahrzeug 180 als ein Lkw mit einem Aufnahmebereich 182, in dem Fertigungsmaterial 181 zum Beschicken des Straßenfertigers 100 vorgehalten wird, ausgestaltet. Auch andere Ausführungsformen sind denkbar.

Der Straßenfertiger 100 umfasst einen Gutbunker 101, in den das Fertigungsmaterial 181 vom Beschickerfahrzeug eingebracht werden kann. In diesem kann das Fertigungsmaterial vorgehalten und beispielsweise der Einbaubohle 102 am anderen Ende des Straßenfertigers 100 zum Ausbringen auf die zu fertigende Straße zugeführt werden. Die genaue Ausgestaltung des Straßenfertigers 100 ist nicht beschränkt und kann auf jede bekannte Art erfolgen.

Der Gutbunker 101 ist dabei im Wesentlichen bevorzugt so ausgestaltet, dass er eine äußere Begrenzung 111 umfasst, die den Innenraum 110 des Gutbunkers zumindest teilweise von der Umgebung abtrennt. Als Innenraum des Gutbunkers ist dabei das Volumen des Gutbunkers zu verstehen, das von der äußeren Begrenzung 111 in ihrem geschlossenen Zustand, wie weiter unten erklärt, eingeschlossen wird. Die äußere Begrenzung kann beispielsweise aus einer Vielzahl von beweglichen und/oder unbeweglichen Metallplatten gebildet sein oder diese umfassen. Dabei muss der Gutbunker nicht so ausgestaltet sein, dass der Innenraum 110 vollständig von der äußeren Begrenzung 111 umgeben ist, sondern kann beispielsweise auch nach oben hin eine Öffnung umfassen.

Erfindungsgemäß ist weiterhin vorgesehen, dass die Begrenzung ein hier nur schematisch gezeigte und in den weiteren Ausführungsformen detaillierter diskutierte mehrkomponentige Klappe 112 umfasst, die als Teil der Begrenzung zumindest zum teilweisen Verschließen des Gutbunkers verwendet werden kann. Die mehrkomponentige Klappe 112 ist beweglich ausgebildet und in der hier dargestellten offenen Position ist die mehrkomponentige Klappe bevorzugt so angeordnet, dass zumindest ein Teil der mehrkomponentigen Klappe (wie im weiteren beschrieben eine erste bewegliche Komponente der mehrkomponentigen Klappe) in einer Höhe h über dem Boden angeordnet ist bzw. in einer Höhe h über dem Boden endet, die geringer ist als die Höhe, in der eine zweite Komponente der mehrkomponentigen Klappe in der offenen Position positioniert ist. Dies erlaubt ein Eindringen einer Komponente 183 des Beschickerfahrzeugs 180 in den Gutbunker, ohne dass der Gutbunker und insbesondere die mehrkomponentige Klappe beschädigt wird. Bei der Komponente 183 des Beschickerfahrzeugs 180 kann es sich beispielsweise um eine Anhängerkupplung handeln, die sich nach hinten von dem Beschickerfahrzeug 180 erstreckt und üblicherweise unterhalb des Aufnahmebereichs 182 für das Fertigungsmaterial 181 angeordnet ist.

Durch die erfindungsgemäße mehrkomponentige Klappe 112 wird erreicht, dass das Beschickerfahrzeug 180 möglichst nahe an den Straßenfertiger 100 heranfahren kann, ohne dabei den Gutbunker 101 zu beschädigen, sodass das Fertigungsmaterial möglichst verlustfrei in den Gutbunker eingebracht werden kann, ohne dass es zu Beschädigungen des Gutbunkers oder des Beschickerfahrzeuges kommt.

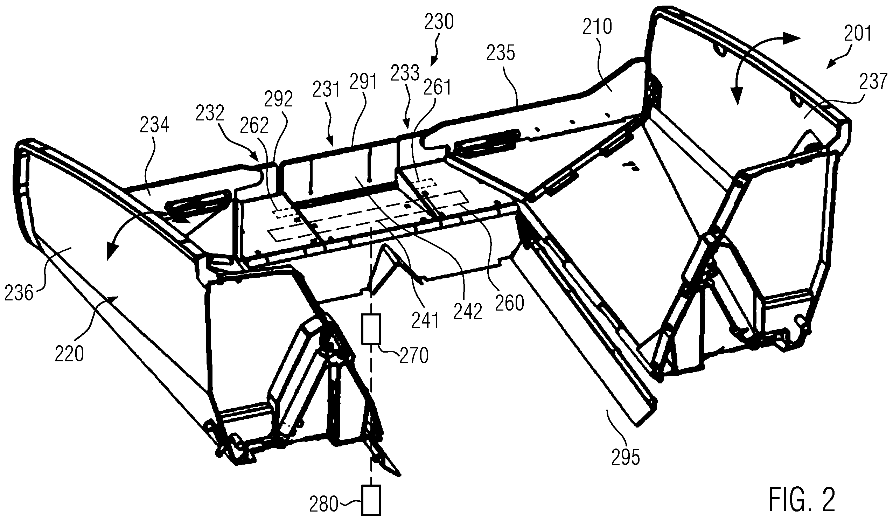

Figur 2 zeigt eine schematische Ansicht eines Gutbunkers 201. Der Gutbunker umfasst als äußere Begrenzung 220 eine Vielzahl von zumindest teilweise beweglichen Komponenten. Dabei sind beispielhaft Seitenflächen 236 und 237 vorgesehen, die entlang der dargestellten Doppelpfeilrichtungen bewegt werden können, um den Gutbunker zu öffnen oder weiter zu schließen. Diese Seitenflächen 236 und 237 können anhebbar und/oder schwenkbar in Richtung des Innenraums des Gutbunkers ausgeführt sein, um beispielsweise das Fertigungsmaterial in Richtung der Mitte des Gutbunkers 201 anzuheben und beispielsweise einem Abfuhrbereich 295, in dem eine Schnecke oder ein Kratzerband angeordnet sein können, zuverlässiger zuzuführen.

Die äußere Begrenzung 220 kann weiterhin die hier gezeigten Flügelflächen 234 und 235 in einem zu einem hier nicht dargestellten Beschickerfahrzeug weisenden Teil 210 des Gutbunkers umfassen. Diese Ausgestaltung ist nicht zwingend und lediglich beispielhaft zu verstehen. Auch diese Flügelflächen können beweglich und insbesondere klappbar und/oder drehbar angeordnet sein, um von einer offenen Position in eine geschlossene Position, in der sie den Innenraum des Gutbunkers begrenzen, bewegt zu werden.

Erfindungsgemäß umfasst der Gutbunker 201 weiterhin eine mehrkomponentige Klappe 230. Diese ist hier gebildet durch eine erste bewegliche Komponente 231 sowie wenigstens eine zweite bewegliche Komponente 233. Die erste bewegliche Komponente kann als mittlere Komponente, etwa ein Mittelblech ausgestaltet sein und die zweite bewegliche Komponente kann wenigstens zwei auf gegenüberliegenden Seiten der ersten beweglichen Komponente angeordnete Klappenelemente 232 und 233 umfassen. Während die zweiten Komponente im folgenden mit jeweils zwei Bezugszeichen referenziert wird, versteht es sich, dass die zweite Komponente auch nur einstückig ausgeführt sein kann, beispielsweise nur ein Klappenelement 232 oder 233 umfassen kann.

Erfindungsgemäß ist vorgesehen, dass die erste bewegliche Komponente 231 der mehrkomponentigen Klappe 230 in der hier dargestellten geöffneten Position tiefer positioniert ist als die zweite bewegliche Komponente 232, 233 der Klappe in der offenen Position, also in der Position in der die mehrkomponentige Klappe den Gutbunker nicht verschließt.

Weiterhin ist erfindungsgemäß vorgesehen, dass die mehrkomponentige Klappe 230 beweglich angeordnet ist, sodass eine Bewegung der ersten Komponente und der zweiten Komponente von der offenen Position in die geschlossene Position erfolgen kann, wobei diese Bewegung bewegungsgekoppelt erfolgt. Die Bewegungskopplung bedeutet, dass die erste Komponente 231 und die zweite Komponente 232, 233 zumindest teilweise während der gesamten Bewegung von der offenen in die geschlossene Position oder umgekehrt gemeinsam, also zeitgleich bewegt werden. Dies kann umfassen, dass durch die Bewegung der ersten Komponente ebenfalls eine Bewegung der zweiten Komponente bewirkt wird. Während eine zumindest teilweise zeitgleiche Bewegung vorgesehen ist, ist dies nicht zwingend gleichbedeutend mit derselben Bewegungsamplitude der ersten und zweiten Komponente. Die erste und zweite Komponente können also beispielsweise trotz Kopplung der Bewegung über unterschiedlich große Wegstrecken bewegt werden.

Die Bewegungskopplung der ersten und zweiten Komponente ist in der in Figur 2 gezeigten Ausführungsform dadurch realisiert, dass die erste Komponente 231 einen Mitnehmer 261, 262 umfasst, der an der zweiten Komponente 232 bzw. 233 angreifen kann und so bei einer Bewegung der ersten Komponente die zweite Komponente mitführen kann. Der Mitnehmer kann beispielsweise als ein Metallfinger von der ersten Komponente in Richtung der zweiten Komponente ausgeführt sein. Auch andere Ausführungsformen sind hier denkbar. Hier nicht dargestellt, jedoch optional vorhanden, kann die zweite Komponente eine Führung für den Mitnehmer 261 bzw. 262 umfassen, sodass der Mitnehmer in der Führung entlang bewegt werden kann. Hiermit wird die zuverlässige Bewegungskopplung gewährleistet.

Diese Art der Bewegungskopplung zwischen der ersten und der zweiten Komponente ist eine rein mechanische Bewegungskopplung, wobei vorgesehen sein kann, dass die erste Komponente 231 beispielsweise über ein Antriebselement 270 aktiv zur Bewegung zwischen der offenen und der geschlossenen Position angetrieben wird. Durch den Mitnehmer 261, 262 erfolgt dann eine Bewegung der zweiten Komponente, bewegungsgekoppelt mit der Bewegung der ersten Komponente.

Alternativ kann jedoch auch vorgesehen sein, dass anstelle eines einzelnen Antriebselements 270 für die erste Komponente 231 sowohl ein Antriebselement 270 für die erste Komponente 231 als auch ein Antriebselement (hier nicht separat gezeigt) für die zweite Komponente 232, 233 vorgesehen ist. Eine Steuereinheit 280, beispielsweise in Form eines Computers oder eines Prozessors mit zugeordnetem Speicher, kann dann so ausgestaltet sein, dass sie die jeweiligen Antriebselemente so steuern kann, dass die erste Komponente und die zweite Komponente zumindest teilweise bewegungsgekoppelt bewegt werden können. Besonders vorteilhaft ist dabei vorgesehen, dass die Bewegung und Anordnung der ersten Komponente und der zweiten Komponente so erfolgt, dass sich weder in der offenen noch der geschlossenen Position und bevorzugt auch während keines Punktes dazwischen ein Spalt zwischen der ersten Komponente und der zweiten Komponente bildet. Hierdurch wird ein Herausfallen von Fertigungsmaterial vermieden.

Das Antriebselement 270 kann grundsätzlich beliebig ausgeführt sein, jedoch können Ausführungsformen des Antriebselements als hydraulisches Antriebselement, beispielsweise in Form eines Pneumatikzylinders, oder ein mechanisches Antriebselement, beispielsweise in Form einer mit der ersten und zweiten Komponente verbundenen Welle, oder ein elektrisches Antriebselement, beispielsweise in Form eines Elektroantriebs oder Servomotor, bevorzugt sein. Die Verwendung von separaten Antriebselementen für die erste Komponente und die zweite Komponente zusammen mit einer entsprechenden Steuereinheit 280 erlaubt eine flexible Steuerung der Bewegung und insbesondere auch eine Steuerung der Positionierung der ersten Komponente in der offenen Position beispielsweise abhängig von der Höhe einer Anhängerkupplung des Beschickerfahrzeugs. Ist die Anhängerkupplung oder eine sonstige in den Gutbunker hineinragende Komponente des Beschickerfahrzeugs höher positioniert, so kann es genügen, wenn die erste Komponente weniger tief positioniert wird. Dies kann insbesondere bei drehbarer erster Komponente (siehe unten) bewirken, dass Fertigungsmaterial leichter in den Innenraum des Gutbunkers rutscht und das Beschädigungsrisiko des Gutbunkers und des Beschickerfahrzeugs dennoch niedrig ist.

Grundsätzlich kann vorgesehen sein, dass die Bewegung der ersten Komponente und der zweiten Komponente zwischen der offenen und der geschlossenen Position um eine hier lediglich schematisch dargestellte Drehachse 260 erfolgt. Die erste Komponente und die zweite Komponente werden also zumindest um die Drehachse 260 verkippt, um zwischen der offenen und der geschlossenen Position hin und her bewegt zu werden.

Dabei kann vorgesehen sein, dass die erste Komponente und die zweite Komponente um dieselbe Drehachse 260 drehbar gelagert sind. Alternativ dazu kann auch vorgesehen sein, dass die Drehachsen der ersten Komponente und der zweiten Komponenten nicht zusammenfallen, aber parallel zueinander sind. Beispielsweise kann die Drehachse der zweiten Komponente in Richtung des Innenraums verglichen mit der Drehachse 260 der ersten Komponente versetzt sein, etwa um bis zu 10cm oder um bis zu 20cm.

Alternativ kann auch vorgesehen sein, dass diese Drehachsen einen Winkel miteinander einschließen. Das Einschließen eines Winkels kann hier besonders bevorzugt sein, um insbesondere Spaltbildungen zu vermeiden, indem beispielsweise die erste Komponente oder die zweite Komponente teilweise hinter die jeweils andere Komponente bewegt wird, sodass Spaltbildungen vermieden werden können.

Die erste Komponente 231 ist in der in Figur 2 gezeigten Ausführungsform zweiteilig ausgebildet. Dies ist nicht zwingend und auch andere Ausführungsformen, insbesondere eine einstückige Ausgestaltung der ersten (und/oder der zweiten Komponente) sind denkbar. In der hier gezeigten Ausführungsform umfasst die zweite Komponente 231 eine Fläche 241, die sich im Wesentlichen horizontal oder leicht geneigt erstrecken kann. Diese Fläche kann beispielsweise als Aufnahmefläche für das Fertigungsmaterial dienen.

Weiterhin umfasst die erste Komponente ein flexibles oder bewegliches Element 242, das sich in der hier gezeigten Ausführungsform der Figur 2 in einer Richtung im Wesentlichen senkrecht zu der Fläche 241 erstreckt und somit eine äußere Begrenzung der ersten Komponenten 231 darstellt, über die kein Fertigungsmaterial vom Innenraum des Gutbunkers 201 hinaus bewegt werden kann. Das flexible oder bewegliche Element 242 kann beispielsweise als ein drehbar gelagertes Blech ausgeführt sein, das zwar in Richtung des Innenraums des Gutbunkers verkippt werden kann, aber nicht über eine bestimmte Endposition hinaus in die Gegenrichtung, also in Richtung des Außenraums, bewegt werden kann. Hierdurch wird erreicht, dass ein Beschickerfahrzeug beispielsweise mit seiner Anhängerkupplung in den Bereich der ersten Komponente eindringen kann, indem das Blech 242 in Richtung des Innenraums verkippt wird. Hierdurch kann der Abstand zwischen Beschickerfahrzeug und Gutbunker reduziert werden, sodass die Gefahr von herausfallendem Fertigungsmaterial während des Beschickens reduziert wird. Gleichzeitig wird so vermieden, dass durch das Eindringen der Anhängerkupplung in den Gutbunker der Gutbunker beschädigt wird.

Das Blech 242 kann auch mit einem hier nicht dargestellten Federelement verbunden sein, das das Blech 242 in seine hier gezeigte, aufrechte Position vorspannt. Ein Verkippen des Blechs 242 in Richtung des Innenraums des Gutbunkers ist dann gegen die Federkraft möglich und kann beispielsweise durch die oben beschriebene Anhängerkupplung bewirkt werden.

Wird diese wieder aus dem Gutbunker abgezogen (etwa nachdem das Beschicken des Gutbunkers beendet ist), bewirkt die Vorspannung des Blechs 242 ein Zurückstellen von dessen Position in die hier gezeigte Ausgangslage.

Alternativ zu einem beispielsweise beweglich gelagerten Blech kann das Element 242 auch aus flexiblem Material bestehen oder flexibles Material umfassen. Beispielsweise kann es sich hierbei um eine Gummilippe handeln, die beispielsweise aus Polyurethan gefertigt sein kann oder eine zumindest äußere Beschichtung aus Polyurethan umfasst. Das flexible Element kann so gefertigt sein, dass es in einem kräftefreien Zustand, der in Figur 2 beispielhaft dargestellt ist, die hier gezeigte Position des Elements 242 einnimmt. Durch Krafteinwirkungen, wie beispielsweise die beschriebene Anhängerkupplung, kann das flexible Element dann verformt werden und beispielsweise in Richtung des Innenraums des Gutbunkers gedrückt werden, sodass beispielsweise ein Teil des Beschickerfahrzeuges, wie beispielsweise die Anhängerkupplung, in diesen Bereich eindringen kann.

Während hier nur im Zusammenhang mit der ersten Komponente 231 beschrieben, können entsprechende Ausgestaltungen der zweiten Komponente ebenfalls vorgesehen sein.

In der hier gezeigten Ausführungsform ist vorgesehen, dass die Fläche 241 der ersten Komponente in der offenen Position der ersten Komponente eine tiefere Position aufweist als korrespondierende Flächen der zweiten Komponente 232 bzw. 233. Während dies genügen kann, um Beschädigungen des Gutbunkers zu vermeiden, kann alternativ oder zusätzlich auch vorgesehen sein, dass sofern die erste Komponente eine unbewegliche äußere Begrenzungsfläche in Form des Elements 242 aufweist, dieses Element eine obere Kante 291 umfasst, die niedriger oder tiefer positioniert ist als die entsprechenden oberen Kanten 292 der zweiten Komponente. Hierdurch kann ein Herausfallen von Fertigungsmaterial vermieden werden, wobei gleichzeitig Beschädigungen des Gutbunkers reduziert werden.

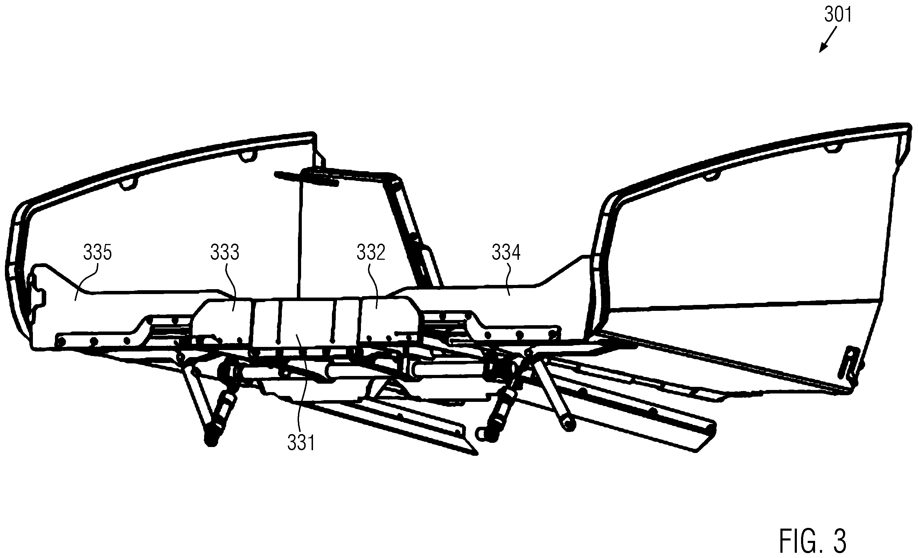

Die Figuren 3 bis 5 zeigen schematisch einen Bewegungsablauf zum Verschließen des Gutbunkers und insbesondere zum Bewegen der mehrkomponentigen Klappe von der offenen Position in die geschlossene Position. In der Figur 3 ist der Gutbunker 301 in der offenen Position gezeigt. Dies bedeutet in diesem Zusammenhang, dass die mehrkomponentige Klappe umfassend die erste Komponente 331 und die zweite Komponente 332, 333 in ihrer offenen Position angeordnet sind. Wie bereits beschrieben ist erfinderungsgemäß vorgesehen, dass in dieser offenen Position die erste Komponente tiefer positioniert ist als die zweite Komponente der Klappe, sodass Beschädigungen etwa durch eine tiefer liegende Komponente eines Beschickerfahrzeugs vermieden werden können.

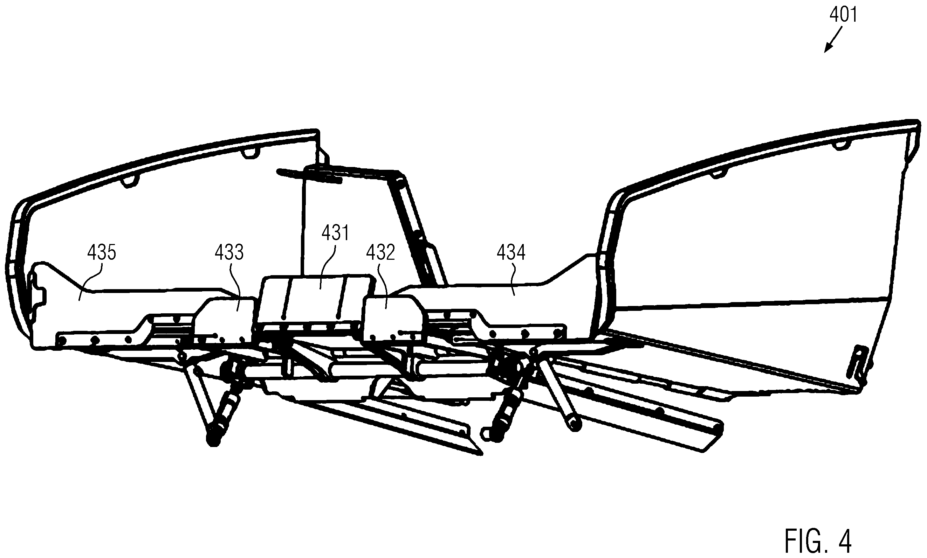

Soll nun der Gutbunker geschlossen werden, so muss die mehrkomponentige Klappe von ihrer offenen Position in die geschlossene Position bewegt werden. Ein Zwischenschritt ist in der Figur 4 gezeigt. In der Figur 4 wird die erste Komponente 431 von ihrer offenen Position in Richtung der geschlossenen Position bewegt. Dies kann wie bereits beschrieben beispielsweise durch Drehen der ersten Komponente um eine Drehachse erfolgen. Wie zu erkennen verändert sich die Position der zweiten Komponente durch Bewegung der ersten Komponente hier nicht. Der von der ersten Komponente 431 von der Figur 3 zur Figur 4 zurückgelegte Weg bzw.

Wegstrecke von der offenen Position aus erfolgt also ohne Mitbewegung der zweiten Komponente in dieser Ausführungsform. Die erste Wegstrecke kann beispielsweise so gewählt werden, dass die erste Komponente und die zweite Komponente am Ende dieser Wegstrecke auf derselben Höhe sind. In dieser Position kann dann der Mitnehmer (siehe Figur 1) ein Mitnehmen der zweiten Komponente 432, 433 bewirken, sodass diese der Bewegung der ersten Komponente 431 in Richtung der geschlossenen Position folgt.

Ist kein Mitnehmer vorgesehen, sondern für die erste Komponente und die zweite Komponente jeweils ein Antriebselement angedacht, so kann vorgesehen sein, dass die Bewegung der ersten Komponente und der zweiten Komponente durch Betätigung der Antriebselemente so gesteuert wird, dass eine Bewegung der zweiten Komponente erst erfolgt, nachdem die erste Komponente die erste Wegstrecke zurückgelegt hat. Während der zweiten Wegstrecke bewegen sich die erste Komponente und die zweite Komponente dann bewegungsgekoppelt miteinander.

Die zweite Wegstrecke kann, muss jedoch nicht die gesamte bis zur geschlossenen Position zurückzulegende Wegstrecke der ersten und/oder zweiten Komponente umfassen. So kann auch vorgesehen sein, dass beispielsweise die geschlossene Position der zweiten Komponente erreicht wird, bevor die geschlossene Position der ersten Komponente erreicht wird, sodass nach Beenden der Bewegung der zweiten Komponente die erste Komponente weiter bewegt wird. Auch die Umkehrung kann vorgesehen sein, sodass die erste Komponente 431 ihre geschlossene Position erreicht, bevor die zweite Komponente 432, 433 ihre geschlossene Position erreicht.

In der Figur 4 wurden nicht nur die zweite Komponente 432, 433 nicht weiter bewegt, sondern auch die Flügelflächen 434 und 435, die entsprechend der Beschreibung zur Figur 2 optional vorgesehen sein können, verharren in ihren geöffneten Positionen. Diese sind wie beschrieben nur beispielhaft zu verstehen und müssen nicht zwingend vorgesehen sein. Ebenso ist es nicht notwendig, dass diese Komponenten mit der mehrkomponentigen Klappe bewegungsgekoppelt sind. Ihre Bewegung kann also auch unabhängig von der Bewegung der Komponenten der mehrteiligen Klappe erfolgen.

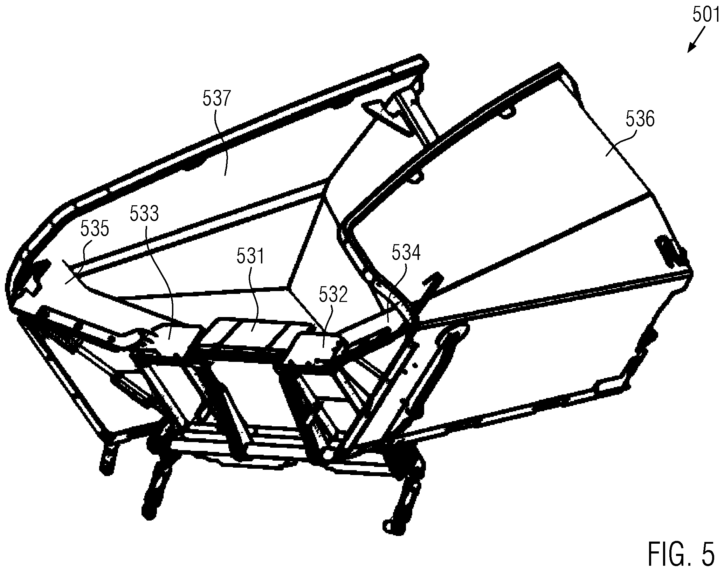

In der Figur 5 ist schließlich die geschlossene Position des Gutbunkers gezeigt. Wie zu erkennen, wurden die erste Komponente 531 und die zweite Komponente 532, 533 ausgehend von der Figur 1 weiter in Richtung des Innenraums des Gutbunkers um die Drehachse bewegt. Auch die Seitenflächen 534 und 535 wurden nun in ihre geschlossene Position bewegt und die Elemente 536 und 537, die bereits in Bezug auf Figur 2 als Elemente 236 und 237 beschrieben wurden, wurden in Richtung des Innenraums des Gutbunkers zugeklappt, sodass der Innenraum des Gutbunkers möglichst vollständig begrenzt ist und kein Material herausfallen kann.

## Patentansprüche

1. Straßenfertiger (100), umfassend einen Gutbunker (101) zum Aufnehmen von Fertigungsmaterial (181), wobei der Gutbunker eine äußere Begrenzung (111) umfasst, die einen Innenraum (110) des Gutbunkers zumindest teilweise von einer Umgebung trennt, und wobei der Gutbunker mit Fertigungsmaterial beschickt werden kann, beispielsweise mittels eines Beschicker-Fahrzeugs (180), wobei die Begrenzung (111) eine mehrkomponentige Klappe (230) zum Verschließen des Gutbunkers umfasst, wobei eine erste bewegliche Komponente (231) der Klappe in einer offenen Position tiefer positioniert ist als eine zweite bewegliche Komponente (232, 233) der Klappe in einer offenen Position, und wobei eine Bewegung der ersten Komponente (231) und der zweiten Komponente (232, 233) von der offenen Position in eine geschlossene Position, in der der Gutbunker verschlossen ist, zumindest teilweilse bewegungsgekoppelt erfolgt.

2. Straßenfertiger (100) nach Anspruch 1, wobei die erste Komponente (231) eine erste obere Kante (291) einer ersten äußeren Begrenzungsfläche und die zweite Komponente (232) eine zweite obere Kante (292) einer zweiten äußeren Begrenzungsfläche aufweist und wobei in der offnen Position die erste obere Kante tiefer positioniert ist als die zweite obere Kante.

3. Straßenfertiger (100) nach Anspruch 1 oder 2, wobei die erste Komponente (231) zur Bewegung von der offenen in die geschlossene Position um eine erste Drehachse (260) drehbar gelagert ist und wobei die zweite Komponente (232, 233) zur Bewegung von der offenen in die geschlossene Position um eine zweite Drehachse drehbar gelagert ist.

4. Straßenfertiger (100) nach Anspruch 3, wobei die erste Drehachse und die zweite Drehachse parallel zueinander verlaufen, oder wobei die erste Drehachse und die zweite Drehachse einen Winkel miteinander einschließen, oder wobei die erste Drehachse und die zweite Drehachse identisch sind.

5. Straßenfertiger (100) nach einem der Ansprüche 1 bis 4, wobei die erste Komponente (231) einen Mitnehmer (261, 262) umfasst, der an der zweiten Komponente (232, 233) angreifen und die zweite Komponente mit der ersten Komponente mitführen kann.

6. Straßenfertiger (100) nach einem der Ansprüche 1 bis 5, wobei die zweite Komponente (232, 233) zwei auf gegenüberliegenden Seiten der ersten Komponente angeordnete Klappenelemente (232, 233) umfasst.

7. Straßenfertiger (100) nach einem der Ansprüche 1 bis 6, wobei die Bewegung der ersten Komponente (231) und/oder die Bewegung der zweiten Komponente (232, 233) durch ein Antriebselement (270) erfolgt.

8. Straßenfertiger (100) nach Anspruch 7, wobei das Antriebselement (270) ein hydraulisches Antriebselement, ein mechanisches Antriebselement oder ein elektrisches Antriebselement umfasst.

9. Straßenfertiger (100) nach einem der Ansprüche 1 bis 8, wobei der größte Abstand (h) eines Punktes der ersten Komponente in der offenen Position zum Boden weniger als 50cm, oder weniger als 45cm, oder weniger als 40cm, oder weniger als 30cm beträgt.

10. Straßenfertiger (100) nach einem der Ansprüche 1 bis 9, wobei die erste Komponente (231) und die zweite Komponente (232, 233) so miteinander bewegungsgekoppelt sind, dass eine Bewegung der ersten Komponente über eine erste Wegstrecke von der offenen in die geschlossene Position ohne Mitbewegen der zweiten Komponente erfolgt und wobei eine Bewegung der ersten Komponente über eine zweite, nach der ersten Wegstrecke von der offenen in die geschlossene Position zurückgelegte Wegstrecke unter Mitbewegen der zweiten Komponente erfolgt.

11. Straßenfertiger (100) nach einem der Ansprüche 1 bis 10, wobei die erste Komponente (231) ein flexibles oder bewegliches Element (242) umfasst, das sich in der offenen Position der ersten Komponente zumindest teilweise in vertikaler Richtung erstreckt und durch Krafteinwirkung in Richtung des Innenraums des Gutbunkers (101) verkippt werden kann.

12. Straßenfertiger (100) nach einem der Ansprüche 1 bis 11, wobei die erste Komponente und/oder die zweite Komponente eine Fläche (241) umfassen, die in der offenen Position in Richtung des Innenraums angeschrägt ist.

13. Kombination aus einem Beschickerfahrzeug (180) und einem Straßenfertiger (100) nach einem der Ansprüche 1 bis 12, wobei das Beschickerfahrzeug (180) dem Gutbunker (101) Fertigungsmaterial (181) zuführen kann und während des Zuführens von Fertigungsmaterial die mehrkomponentige Klappe (230) in der offenen Position angeordnet sein kann und nach dem Zuführen von Fertigungsmaterial in die geschlossene Position verbracht werden kann.

14. Verfahren zum Beschicken eines Gutbunkers (101) eines Straßenfertigers (100) nach einem der Ansprüche 1 bis 12 mit Fertigungsmaterial (180), wobei das Verfahren ein Positionieren der mehrkomponentigen Klappe (230) in der offenen Position, ein anschließendes Positionieren eines Beschickerfahrzeugs (180) zum Zuführen von Fertigungsmaterial (181) und Zuführen von Fertigungsmaterial an den Gutbunker (101), ein zumindest teilweises Wegbewegen des Beschickerfahrzeugs (180) vom Gutbunker und ein anschließendes Bewegen der mehrkomponentigen Klappe (230) in die geschlossene Position umfasst.
